# EUROPEAN PATENT SPECIFICATION

(11) **EP 0 457 275 B1**
(45) Date of publication and mention of the grant of the patent: **06.03.1996**
(21) Application number: 91107794.9
(22) Date of filing: 14.05.1991
(51) Int. Cl.: C08F 291/02, C08F 255/08, C08F 255/04, C08F 255/06, C08F 285/00, C08F 8/46

(54) **Shock-resistant vinyl-aromatic graft copolymer having improved mechanical properties**
Schlagfester vinylaromatischer Pfropfpolymer mit verbesserten mechanischen Eigenschaften
Copolymère greffé vinylaromatique résistant au choc ayant des propriétés mécaniques amélioriées

(30) Priority: 15.05.1990 IT 2030690
(43) Date of publication of application: 21.11.1991
(73) Proprietor: ENICHEM S.p.A., I-20124 Milano (IT)
(72) Inventor: Rossi, Anna Grazia, I-46100 Montova (IT); Ghidoni, Dario, I-46020 Gonzaga, Mantova (IT); Fasulo, Gian Claudio, I-46010 San Silvestro, Mantova (IT); Dalpra', Fiorenzo, I-46030 Borgoforte, Mantova (IT); Borghi, Italo, I-44100 Ferrara (IT)
(74) Representative: Weinhold, Peter, Dr.

(56) References cited:
- EP-A- 0 249 730
- EP-A- 0 267 506
- WO-A-89/01962

## Description

The present invention relates to shock-resistant vinyl-aromatic graft copolymers endowed with improved mechanical properties.

More specifically, the present invention relates to shock-resistant vinyl-aromatic graft copolymers containing an olefinic elastomer as rubber component, and having improved mechanical properties, in particular an improved shock-resistance (impact-resistance) and a high ultimate elongation.

It is well known that shock-resistant vinyl-aromatic copolymers of the above kind may be obtained by means of mass or mass-suspension polymerization of solutions of an olefinic elastomer, such as ethylene/propylene (EPM) or ethylene/propylene/unconjugated diene (EPDM) rubbers, in a vinyl-aromatic monomer, either alone or mixed with other ethylenically unsaturated and copolymerizable monomers.

The shock-resistant vinyl-aromatic copolymers based on EPM or EPDM rubbers are usually obtained in the form of concentrates with a high rubber content and used as such or mixed with rigid matrices (such as styrene/acrylonitrile (SAN) or similar ones) with the aim of obtaining products suitable for injection and thermo-moulding.

The styrene-acrylonitrile copolymers grafted onto EPM or EPDM rubbers, usually known as AES resins, have excellent toughness, but the poor ultimate elongation under tensile stress limits their fields of application.

In particular, their resilience, although good, does not allow them to be used in the production of thermo-moulded articles involving deep-drawing and is not sufficient for them to be used in certain fields of application such as that of sheets for advertising and posters.

One way of improving these properties of AES resins is to mix them with other polymers possessing the missing properties, in order to obtain a final material which has the required combination of properties. This approach, however, has been successful only in a few cases; in fact, in most cases the corresponding blend shows a combination of the worst properties of each component with the result that the final product exhibits properties which are inferior to those of each individual component. The reason for this drawback is that not all polymers are compatible with one another and consequently faulty areas are formed where the components do not adhere, creating weak and easily breakable points.

International application No. WO 89/01962 describes a method for forming a blended polymer composition comprising a.) contacting a styrenic polymer which may comprise a rubbery material with an ethylenically unsaturated grafting agent containing reactive groups selected e.g. from carboxylic acid and carboxylic acid derivatives to produce a modified styrenic polymer and b.) contacting said modified styrenic polymer having amino-, hydroxyl- or carboxyl groups to form a blended composition. The grafting agent is said to improve the miscibility of the styrenic polymer with incompatible polymers such as polyamides or polyesters.

EP-A-0267506 discloses ABS polymers comprising a grafted polymer consisting of a styrene derivative, (meth)acrylonitril and a butadiene rubber which polymer is blended with a compound selected from maleic or fumaric acid derivatives in order to reduce the content of monomeric butadiene without changing the other properties of the polymer.

It has now been found that the above-mentioned drawbacks of shock-resistant vinyl-aromatic copolymers containing EPM or EPDM olefinic elastomers as rubber component can be overcome by adding to the copolymer small quantities of from 0.001 to 0.3 parts by weight of an ethylenically unsaturated carboxylic acid and/or one of its derivatives such as anhydrides, amides and esters.

The present invention, consequently, provides a shock-resistant vinyl-aromatic graft copolymer which has excellent mechanical properties and a particularly high ultimate elongation and resilience and comprises a copolymer of a vinyl-aromatic monomer and an acrylic monomer as well as an olefinic elastomer. Said copolymer is at least partially grafted onto the olefinic elastomer, which contains 0.001 to 0.3 parts by weight of units derived from an ethylenically unsaturated carboxylic acid and/or one or more of its derivatives, such as anhydrides, amides and esters.

The shock-resistant vinyl-aromatic graft copolymer of the present invention comprises 100 parts by weight of shock-resistant vinyl-aromatic copolymer composed of from 90 to 30% by weight of vinyl-aromatic monomer/acrylic monomer-copolymer which is at least partially grafted onto 10 to 70% by weight of the olefinic elastomer, and from 0.001 to 0.3 parts by weight of ethylenically unsaturated carboxylic acid and/or one or more of its derivatives such as anhydrides, amides and esters, said monomer(s) being grafted onto said shock-resistant vinyl-aromatic copolymer.

In the vinyl-aromatic monomer/acrylic monomer-copolymer the weight ratio of the two components is usually in the range of from 90/10 to 50/50, preferably of from 80/20 to 60/40.

The (total) amount of ethylenically unsaturated carboxylic acid and/or derivative(s) thereof preferably ranges from 0.05 to 0.3% by weight, particularly from 0.1 to 0.2% by weight, with respect to the shock-resistant vinyl-aromatic copolymer.

Tests have proved that the shock-resistant vinyl-aromatic graft copolymer of the present invention shows an ultimate elongation under tensile stress and a resilience which depend on the quantity of ethylenically unsaturated acid (derivative) grafted onto the shock-resistant vinyl-aromatic copolymer.

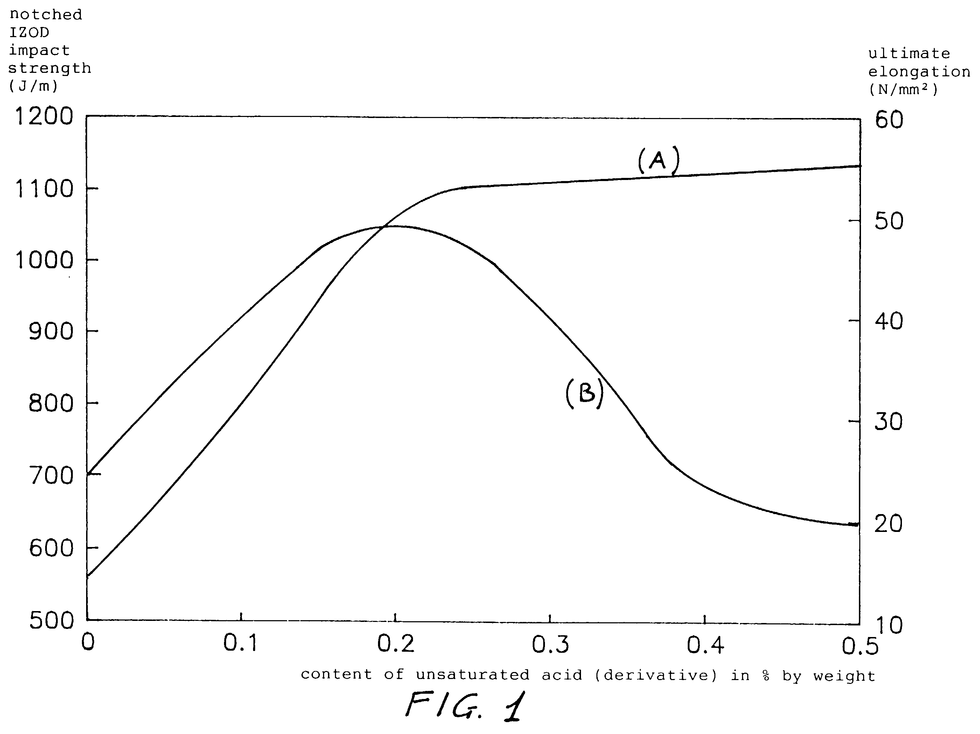

The enclosed figure 1 shows the variations of the ultimate elongation under tensile stress (A) and of the resilience (B) in relation to the quantity of said unsaturated acid (derivative) for a styrene-acrylonitrile copolymer (SAN) (70/30 by weight) partially grafted on an EPDM rubber (SAN/EPDM = 65/35 by weight).

It can be seen that the ultimate elongation under tensile stress (A) increases with an increase in the unsaturated acid (derivative) content and reaches its maximum at an unsaturated acid (derivative) content of 0.2% by weight. With a higher content of unsaturated acid (derivative) the elongation remains practically constant.

The notched resilience (IZOD) (B), on the other hand, increases with an increase of the unsaturated acid (derivative) content grafted onto the copolymer, but shows values similar to those of the shock-resistant vinyl-aromatic copolymer which does not contain the above acid (derivative), when the content of the latter is 0.4% by weight or higher.

The shock-resistant vinyl-aromatic graft copolymers according to the present invention may be prepared, e.g., by means of the direct polymerization of the monomers or by grafting the ethylenically unsaturated carboxylic acid (derivative) onto the previously prepared shock-resistant copolymer of vinyl-aromatic monomer/acrylic monomer/olefinic elastomer in an extruder and in the presence of a (preferably peroxide) catalyst at a temperature which is at least equal to the melting point of the components.

A continuous polymerization is preferably carried out, using a solution of a mixture of monomers including a vinyl-aromatic monomer, an acrylic monomer and an ethylenically unsaturated carboxylic acid (derivative), in the presence of an olefinic elastomer, a polymerization initiator and an inert solvent.

The polymerization is preferably carried out in one or more reaction steps, and in each step the reaction mass should be slightly and homogeneously stirred to ensure a thorough heat exchange.

The olefinic elastomer and the initiator may be homogeneously dissolved in the monomers and in the solvent, whereafter the solution may be fed to the first reaction step; the polymerization may then be continued in the subsequent steps at a temperature preferably ranging from 70 to 150°C, at a pressure which is higher than the vapor pressure of the added monomers and the solvent.

When the polymerization process is finished, the reaction mass is preferably passed through a thin-film evaporator heated at a temperature of from 150 to 300°C and equipped with rotating blades which give the polymer the sufficient shear stress resistance to obtain the required morphological structure. The unreacted monomers and solvent, recycled from the evaporator, may again be used in the first step.

This procedure allows to polymerize the monomers with mild stirring, making possible at the same time an excellent thermal control of the reaction without having to take into consideration the size and structure of the particles to be discharged in the final step and in the thin-film evaporator in which the unreacted monomers and solvent are eliminated. Moreover, the particle size is reduced thereby to values below 1, preferably from 0.1 to 0.4 µm, by means of a dynamic treatment which causes a variation in the structure of the elastomeric phase.

The solvent used is preferably an aromatic hydrocarbon such as benzene, toluene, ethyl-benzene, xylene, isopropyl-benzene, etc. The amount thereof usually ranges from 50 to 300, and preferably from 60 to 150, parts by weight per 100 parts by weight of the monomers and the elastomer.

The polymerization reaction, as generally all solution graft-polymerization reactions, is carried out in the presence of a radicalic polymerization initiator. All known radicalic initiators can be used, but the organic peroxides normally used in graft-polymerizations are preferred. The most suitable organic peroxides are aromatic diacyl peroxides such as dibenzoyl peroxide; peroxy-esters such as tert-butyl peroxy-isobutyrate, tert-butyl peroxy-laurate, tert-butyl-peroxy-benzoate, etc.; perketals such as 1,1-di-tert-butyl-peroxy-3,3,5-trimethyl-cyclohexane, 2,2-di-tert-butyl-peroxy-butane, etc.; peroxy-carbonates such as tert-butyl-peroxy-isobutyl carbonate; and peroxy-ketones such as 1,1-bis-tert-butyl-peroxy-3,3,5-trimethyl cyclohexanone, etc. It is also possible to use mixtures of two or more of the above peroxides. The amount of peroxide is preferably such as to allow a monomer conversion in the first reactor of from 40 to 80% by weight; usually the amount used ranges from 0.1 to 2.0% by weight with respect to the total amount of the monomers and the elastomer.

The above-mentioned polymerization process allows a high degree of grafting of the resin composed of vinyl-aromatic and acrylic monomers and of the ethylenically unsaturated carboxylic acid (derivative) onto the elastomeric chain. This grafting takes place mainly during the first polymerization step which occurs isothermally, preferably at a temperature which corresponds to the half-time of the peroxide initiator (usually about one hour). In practice, the temperature preferably used is from 100 to 250°C.

The polymerization is preferably carried out in reaction vessels which are particularly suitable for high viscosity solutions and for handling highly exothermic reactions.

Normally, stirred tubular reactors of the "plug flow" type are preferred, having a length/diameter ratio higher than 3, equipped with internal tubes and external jackets in which a thermostatic fluid provides for high coefficients of thermal exchange. The reactor can have two or more sections, each of them being heated at the same or at different temperatures.

Usually, it is preferred to obtain, in the first section of the reactor, a monomer conversion of 40 to 80% by weight and more specifically from 50 to 75% by weight with respect to the monomers.

The reaction vessels are usually maintained at a temperature of from 70 to 150°C under a pressure higher than the vapor pressure of the fed components, for example 0.5 to 5 bar.

During the subsequent steps, there is usually no further addition of initiator and/or monomers. It is preferred to not have any unreacted polymerization initiator in the polymer at the end of the last reaction step.

The thin-film evaporator used in the process of the present invention for the finishing operation and for obtaining the desired particle size can be of any known type. In particular, the thin-film evaporator described in EP-A-267025 is preferred.

The above-mentioned solution and continuous polymerization process is already known and described in EP-A-286071, whose contents are an integral part of the present description.

The shock-resistant vinyl-aromatic graft copolymers of the present invention can also be prepared, by extrusion or by means of any other equipment suitable for mixing at high temperatures, by direct reaction between the previously prepared shock-resistant copolymer - composed of vinyl-aromatic monomer, acrylic monomer and olefinic elastomer - and the ethylenically unsaturated carboxylic acid (derivative), preferably in the presence of a peroxide initiator having a half-life of from 2 to 20 seconds at 200°C.

It is preferred to carry out the reaction at temperatures of at least 150°C and, more specifically, of from 170 to 250°C for at least 15 seconds.

Examples of suitable peroxide initiators are tert-butylcumyl peroxide, bis(tert-butyl-peroxy-isopropyl)benzene, di-tert-butyl peroxide, 2,5-dimethyl-2,5-di-tert-butyl peroxy-hexane, dicumyl peroxide etc. All of these peroxides are commercially available, e.g., under the tradenames Trigonox® and Perkadox® (AKZO).

Concentrations of the peroxide initiator of from 0.01 to 1 and preferably from 0.1 to 0.5 parts by weight per 100 parts by weight of shock-resistant copolymer are normally used.

The vinyl-aromatic monomer used in the production of the shock-resistant graft copolymer of the present invention, preferably is one of the general formula (I): 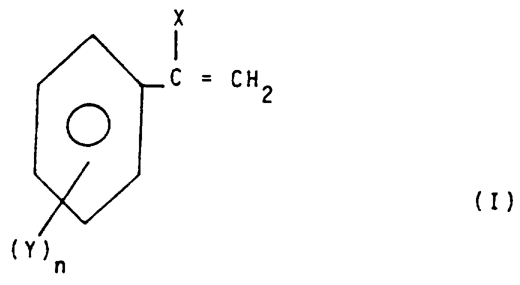 wherein
- X: is hydrogen or C₁-C₄ alkyl (e.g. methyl or ethyl);
- Y: is halogen (e.g. F, Cl, Br or I, particularly F or Cl) or (C₁-C₄) alkyl (e.g. methyl or ethyl);
- n: is zero or an integer of from 1 to 5 (e.g. 1, 2 or 3).

Preferred examples of vinyl-aromatic monomers of the above general formula (I) are styrene; methyl-styrene; mono-, di-, tri-, tetra- and penta-chloro-styrene and the corresponding alpha-methyl-styrenes; styrenes alkylated in the nucleus and the corresponding alpha-methyl-styrenes such as ortho- and para- methyl-styrenes; ortho- and para-methyl-alpha-methyl- styrenes, 3,5-di-methyl-styrene and tert-butyl-styrene, etc.

These monomers can be used alone or in combination of two or more.

The acrylic monomer preferably has the general formula (II): 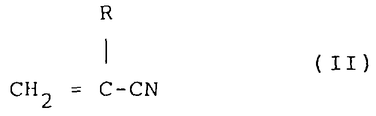 wherein R is hydrogen or an alkyl group containing 1 to 5 carbon atoms (e.g. methyl). Acrylonitrile is the preferred acrylic monomer. Said monomers can also be used alone or in combination.

Olefinic elastomers suitable for being used in the copolymers of the present invention include EPM and EPDM rubbers, in which the ethylene/propylene weight ratio ranges from 90/10 to 20/80. The content of unconjugated diene, if any, ranges from 4 to 50 in terms of the iodine number. The unconjugated diene can be, e.g., a norbornene, a cyclic diene such as dicyclopentadiene and cyclooctadiene-1,5, and/or an aliphatic diene such as pentadiene -1,4, hexadiene-1,4, hexadiene-1,5, etc.

The preferred EPDM rubbers are the terpolymers ethylene/ propylene/5-methyl-tetrahydroindene, ethylene/propylene/6-ethylidene-2-norbornene, ethylene/propylene/6-methylene-2-norbornene, ethylene/propylene/5-ethylidene-2-norbornene, etc.

The amount of elastomer (or elastomer mixture) preferably is such as to have a percentage by weight of rubber in the final copolymer of from 10 to 70%, preferably from 15 to 40%

Any ethylenically unsaturated monomer containing in its molecule at least one (e.g. 1 or 2) carboxylic groups or groups derived therefrom can be used for the production of the shock-resistant vinyl-aromatic graft copolymers of the present invention. Examples of such monomers are maleic acid, fumaric acid, maleic anhydride, maleic amide, unsaturated carboxylic acids such as acrylic acid, crotonic acid, vinylacetic acid, pentenoic acid, 2- and 3-pentenoic acid, alpha-ethyl-acrylic acid, beta-methyl-crotonic acid, 2-methyl-2-pentenoic acid, alpha-ethyl-crotonic acid, 2,2-dimethyl-3-butenoic acid, heptenoic acid, 2-octenoic acid, 9-tetradecenoic acid, 9-hexadecenoic acid, 2-octadecenoic acid, 9-octadecenoic acid, decosenoic acid, erucic acid, 2,4-pentadienoic acid, diallylacetic acid, linoleic acid, linolenic acid, etc. and esters, amides and anhydrides of the above unsaturated acids.

The preferred ethylenically unsaturated acids (derivatives) are maleic anhydride, maleic imide and fumaric acid, particularly the first one because of its high reactivity.

It should be apparent that in the graft-polymerization not all unsaturated monomers are grafted onto the rubber substrate; some of them may form "free" copolymers which remain in physical admixture with the graft-copolymer.

The amount of monomers grafted onto the rubber substrate can be determined by the extraction of the copolymer using a solvent of the ungrafted resin.

The shock-resistant vinyl-aromatic graft copolymers of the present invention can easily be injection-moulded, extruded and thermo-moulded and show a number of characteristics which make them suitable for being used for the production of moulded articles having high shock-resistance and elongation under tensile stress. For these reasons the shock-resistant vinyl-aromatic graft copolymers of the present invention are particularly suitable for the thermomoulding technique and may be used for the production of electrical household appliances, electronic and technical products such as boxes, mechanical part casings, containers, sheets, foils, rods, etc.

The following examples are to serve as illustration of the present invention without limiting it in any way.

### EXAMPLE 1

A mixture of
- 19.7 parts by weight of styrene
- 9.3 parts by weight of acrylonitrile
- 11 parts by weight of EPDM rubber containing 61% by weight of ethylene, 30% by weight of propylene and 9% by weight of ethylidene-norbornene
- 60 parts by weight of toluene
- 0.1 parts by weight of maleic anhydride
- 0.25 parts by weight of peroxide initiator 1,1-bis(tert-butyl peroxy) 3,3,5-trimethyl-cyclohexane (TRIGONOX® 29B50);
was continuously fed into two tubular reactors arranged in series, at a temperature of 80°C and at a flow rate of 1 l/h. Each reactor was of the "full" type, with piston flow, a total volume of 2.5 l and a length/diameter ratio of 5. Each tubular reactor contained three reaction sectors of equal volume, each of them thermostatically heated in such a way as to maintain the following temperature profile in the reaction mass:
- reactor one: 105°C; 105°C; 105°C
- reactor two: 115°C; 115°C; 115°C
The pressure in each reactor was 3 bar.

Each reactor was equipped with a stirrer having 48 horizontal blades rotating at 50 r.p.m.

The mass discharged from the reactor had a solids content of 38% by weight (conversion=80%). The mass was fed into a thin film evaporator having an internal surface of 0.04 m, equipped with a rotor with 4 lines of blades which form an angle of 30° as regards the rotor axis and an angle of 5° as regards the axial plane through the connection points of the blades.

The rotor had a speed of 250 r.p.m. The evaporator was heated by two external jackets with diathermic oil at a temperature of 250°C.

This equipment was under vacuum with a residual pressure of 20 mm Hg.

The discharged material had a residual content of volatile material of 0.11% and was re-extruded by means of a Bandera® TR 45 single screw extruder.

The copolymer thus obtained had the following composition (by weight):

| | |
|---|---|
| - elastomer phase | 45 % |
| - styrene/acrylonitrile copolymer (SAN) | 55 % |
| - free EPDM rubber in the elastomer phase | 15 % |
| - total grafted maleic anhydride | 0.25 % |
| - maleic anhydride grafted onto styrene/acrylonitrile (SAN) copolymer | 0.15 % |
| - maleic anhydride grafted onto elastomer phase | 0.10 % |

The separation of the SAN copolymer from the elastomer phase was effected by the following procedure: 0.5 grams of product were treated with 40 ml of a 70/30 solution of acetone/ ethanol. The non-soluble product, i.e. the rubbery phase of the copolymer, was washed using the same solution and centrifuged twice. Then 5 ml of acetone/ethanol solution were added and precipitation was effected with 40 ml of ethanol. The precipitate was filtered and dried in an oven at 35°C under vacuum (0.1 mm of Hg) for 12 hours and then weighed. The soluble part, i.e. the styrene/acrylonitrile copolymer, was concentrated to 10 ml of solution, precipitated by using 150 ml of ethanol and then filtered and dried.

The amount of grafted maleic anhydride was determined by atomic absorption spectroscopy.

The characteristics of the obtained copolymer are given hereinafter.

The following methods were used to determine the characteristics of the copolymer:
a. Thermal properties
   The VICAT softening point at 1 kg was determined according to ISO 306.
b. Rheological properties
   The melt flow index (M.F.I.) was determined according to ASTM D 1238 at 220°C and 10 kg.
c. Mechanical properties
   The tensile strength and the coefficient of elasticity were determined according to ASTM D 638 and the IZOD notched-bar resilience was determined according to ASTM D 256 at 23°C, on samples having a thickness of 3.2 mm.

| | | |
|---|---|---|
| THERMAL PROPERTIES: VICAT | | 108°C |
| RHEOLOGICAL PROPERTIES: M.F.I. | | 9 g/10 |
| MECHANICAL PROPERTIES: TENSILE STRENGTH | | |
| | - elasticity modulus | 1450 N/mm |
| | - yield strength | 28 N/mm |
| | - ultimate tensile stress | 26 N/mm |
| | - ultimate elongation | 40 N/mm |
| | IZOD | 1143 J/m |

### EXAMPLES 2 to 6

A mixture of an AES resin (styrene/acrylonitrile/EPDM rubber copolymer), maleic anhydride and di-cumyl-peroxide as catalyst, was fed into a BAKER-PERKINS MPC V-30 twin-screw extruder in the quantities shown in Table 1.

The AES resin composition was:
- 35% by weight of EPDM rubber and
- 65% by weight of styrene/acrylonitrile (70/30) copolymer

The extrusion conditions were:

| | | |
|---|---|---|
| - flow rate: | | 5.2-5.3 kg/hr |
| - rev. speed of the extruder | | 280 r.p.m. |
| - torque moment | | 90/95% |
| - head pressure | | 12-14 bar |
| - temperatures in the | 1st sector | 171-172 °C |
| | 2nd sector | 245-247 °C |
| | 3rd sector | 238-239 °C |
| | 4th sector | 221-223 °C |

The chemical composition and the characteristics of the copolymers obtained were determined and the obtained results are shown in the following Table 1:

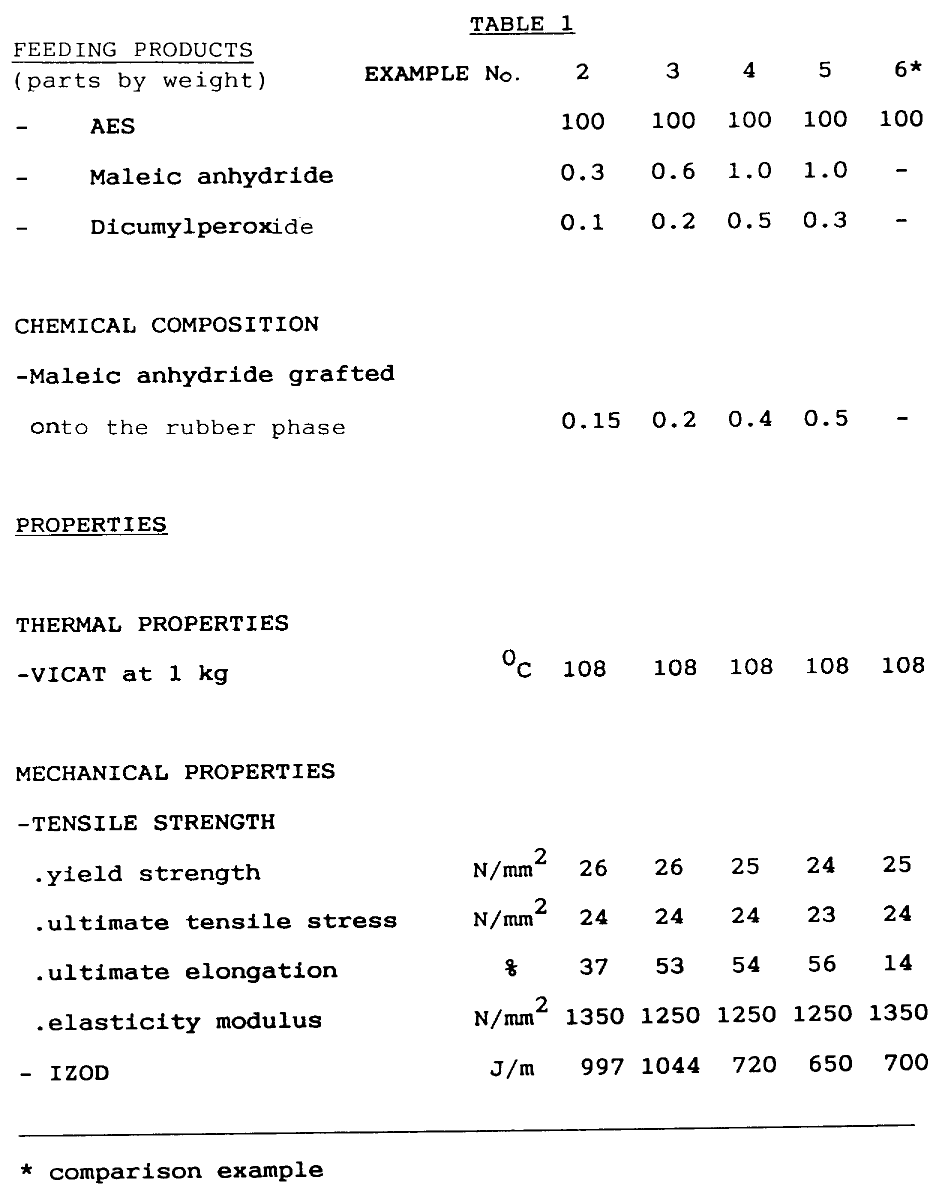

## Claims

1. Shock-resistant vinyl-aromatic graft copolymer comprising 100 parts by weight of a shock-resistant vinyl-aromatic copolymer composed of 90 to 30% by weight of vinyl-aromatic monomer/acrylic monomer-copolymer which is at least partially grafted onto 10 to 70% by weight of an olefinic elastomer selected from an EPM and/or EPDM rubber in which the weight ratio ethylene/propylene is from 90/10 to 20/80 and the content of unconjugated diene, if any, is from 4 to 50 in terms of the iodine number, and from 0.001 to 0.3 parts by weight of an ethylenically unsaturated carboxylic acid and/or derivative thereof which is grafted onto said shock-resistant vinyl-aromatic copolymer.

2. Graft copolymer according to claim 1, wherein the derivative of the ethylenically unsaturated carboxylic acid is an anhydride, amide or ester.

3. Graft copolymer according to any one of claims 1 or 2, wherein the weight ratio of vinyl-aromatic monomer to acrylic monomer ranges from 90/10 to 50/50, particularly from 80/20 to 60/40.

4. Graft copolymer according to any one of the preceding claims, wherein the amount of ethylenically unsaturated carboxylic acid (derivative) ranges from 0.05 to 0.3% by weight with respect to the copolymer.

5. Graft copolymer according to any one of the preceding claims, wherein the vinyl-aromatic monomer has the general formula (I): 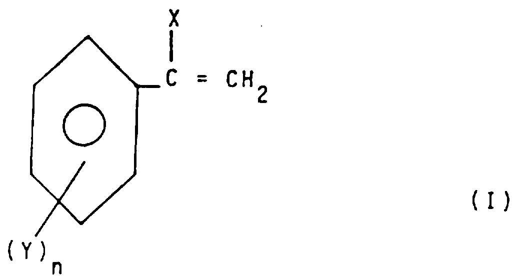 wherein
X is hydrogen or C₁-C₄ alkyl;
Y is halogen or C₁-C₄ alkyl; and
n is 0 or an integer of from 1 to 5.

6. Graft copolymer according to any one of claims 1 to 5, wherein the acrylic monomer has the general formula (II): 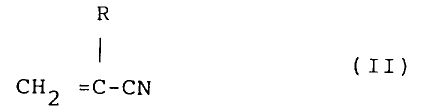 in which R is hydrogen or a C₁-C₅ alkyl group, particularly hydrogen.

7. Graft copolymer according to any one of the preceding claims, in which the ethylenically unsaturated carboxylic acid (derivative) is selected from maleic acid, fumaric acid, acrylic acid, crotonic acid, vinyl- acetic acid, pentenoic acid, 2- and 3-pentenoic acid, alpha-ethyl-acrylic acid, beta-methyl-crotonic acid, 2-methyl-2-pentenoic acid, alpha-ethyl-crotonic acid, 2,2-dimethyl-3-butenoic acid, heptenoic acid, 2-octenoic acid, 9-tetradecenoic acid, 9-hexadecenoic acid, 2-octadecenoic acid, 9-octadecenoic acid, decosenoic acid, erucic acid, 2,4-pentadienoic acid, diallylacetic acid, linoleic acid, linolenic acid, esters, amides and anhydrides of the above unsaturated acids, and particularly comprises maleic anhydride.

8. Process for the preparation of the shock-resistant vinyl-aromatic graft copolymer according to any one of the preceding claims, comprising the polymerization of a mixture of monomers including a vinyl-aromatic monomer, an acrylic monomer and an ethylenically unsaturated carboxylic acid and/or derivatives thereof in the presence of an olefinic elastomer, a polymerization initiator and an inert solvent.

9. Process according to claim 8, wherein the polymerization is carried out in one or more successive steps, in each step the reaction mass being slightly and homogeneously stirred to ensure a thorough heat exchange, and wherein at the end of the polymerization the reaction mass is fed into a thin-film evaporator heated at a temperature of from 150 to 300°C and equipped with rotating blades.

10. Process according to any one of claims 8 and 9, wherein the polymerization is carried out in the presence of from 0.1 to 2% by weight, with respect to the total amount of monomers and elastomer, of a radicalic polymerization initiator, preferably an organic peroxide.

11. Process for the preparation of the shock-resistant vinyl-aromatic graft copolymer according to any one of claims 1 to 7, which comprises reacting, in an equipment suitable for stirring under heat, a previously prepared shock-resistant copolymer of vinyl-aromatic monomer/acrylic monomer/olefinic elastomer and an ethylenically unsaturated carboxylic acid and/or derivative thereof in the presence of a peroxide initiator - preferably showing a half-life of from 2 to 20 seconds at 200°C - at a temperature not lower than the melting temperature of the components, preferably at a temperature of at least 150°C and particularly at a temperature of from 170 and 250°C for at least 15 seconds.

## Patentansprüche

1. Schlagfestes vinylaromatisches Pfropf-Copolymer, das 100 Gew.-Teile eines schlagfesten vinylaromatischen Copolymers, das zusammengesetzt ist aus 90 bis 30 Gew.-% Copolymer aus vinylaromatischem Monomer und Acrylmonomer, wobei das Copolymer wenigstens teilweise aufgepfropft ist auf 10 bis 70 Gew.-% eines olefinischen Elastomers, ausgewählt aus einem EPM- und/oder EPDM-Kautschuk, worin das Gewichtsverhältnis von Ethylen/Proylen von 90/10 bis 20/80 beträgt und der Gehalt an nichtkonjugiertem Dien, sofern anwesend, von 4 bis 50 (als Jodzahl) beträgt, und 0,001 bis 0,3 Gew.-Teile einer ethylenisch ungesättigten Carbonsäure und/oder eines Derivats davon, die auf das genannte schlagfeste vinylaromatische Copolymer aufgepfropft ist, umfaßt.

2. Pfropf-Copolymer nach Anspruch 1, worin das Derivat der ethylenisch ungesättigten Carbonsäure ein Anhydrid, Amid oder ein Ester ist.

3. Pfropf-Copolymer nach einem der Ansprüche 1 oder 2, worin das Gewichtsverhältnis von vinylaromatischem Monomer zu Acrylmonomer im Bereich von 90/10 bis 50/50, insbesondere von 80/20 bis 60/40 liegt.

4. Pfropf-Copolymer nach einem der vorhergehenden Ansprüche, worin die Menge an ethylenisch ungesättigter Carbonsäure (Derivat) von 0,05 bis 0,3 Gew.-%, bezogen auf das Copolymer, beträgt.

5. Pfropf-Copolymer nach einem der vorhergehenden Ansprüche, worin das vinylaromatische Monomer die allgemeinen Formel (I) hat: 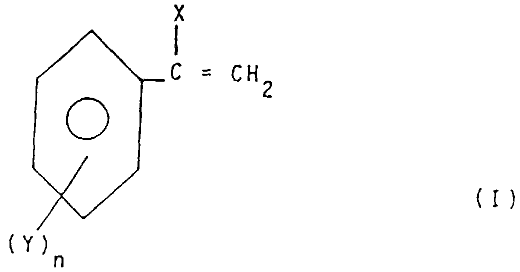 worin
X = Wasserstoff oder ein C₁-C₄-Alkyl ist;
Y = Halogen oder ein C₁-C₄-Alkyl ist und
n = 0 oder ein ganze Zahl von 1 bis 5 bedeutet.

6. Pfropf-Copolymer nach einem der Ansprüche 1 bis 5, worin das Acrylmonomer die allgemeine Formel (II) hat: 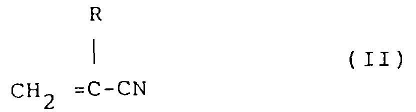 worin R = Wasserstoff oder eine C₁-C₅-Alkylgruppe, insbesondere Wasserstoff, bedeutet.

7. Pfropf-Copolymer nach einem der vorhergehenden Ansprüche, wobei die ethylenisch ungesättigte Carbonsäure (Derivat) ausgewählt wird aus Maleinsäure, Fumarsäure, Acrylsäure, Crotonsäure, Vinylessigsäure, Pentensäure, 2- und 3-Pentensäure, α-Ethylacrylsäure, β-Methylcrotonsäure, 2-Methyl-2-pentensäure, α-Ethylcrotonsäure, 2,2,-Dimethyl-3-butensäure, Heptensäure, Octensäure, 9-Tetradecensäure, 9-Hexadecensäure, 2-Octadecensäure, 9-Octadecensäure, Decosensäure, Erukasäure, 2,4-Pentadiensäure, Diallylessigsäure, Linolensäure, Ester, Amide und Anhydride der obigen ungesättigten säuren, und das insbesondere Maleinsäureanhydrid umfaßt.

8. Verfahren zur Herstellung des schlagfesten vinylaromatischen Pfropf-Copolymers nach einem der vorhergehenden Ansprüche, das umfaßt: die Polymerisation einer Mischung von Monomeren, einschließlich einem vinylaromatischen Monomer, einem Acrylmonomer und einer ethylenisch ungesättigten Carbonsäure und/oder eines Derivats davon, in Anwesenheit eines olefinischen Elastomers, eines Polymerisations-Initiierungsmittels und eines inerten Lösungsmittels.

9. Verfahren nach Anspruch 8, wobei die Polymerisation in einem oder mehreren aufeinanderfolgenden Schritten durchgeführt wird, wobei die Reaktionsmasse bei jedem Schritt leicht und homogen gerührt wird, um einen vollständigen Wärmeaustausch sicherzustellen, und wobei die Reaktionsmasse am Ende der Polymerisation in einen auf eine Temperatur von 150 bis 300°C erhitzten, mit rotierenden Schaufeln ausgestatteten Dünnschichtverdampfer eingeführt wird.

10. Verfahren nach einem der Ansprüche 8 und 9, wobei die Polymerisation in Anwesenheit von 0,1 bis 2 Gew.-%, bezogen auf die Gesamtmenge an Monomeren und Elastomer, eines radikalischen Polymerisations-Initiierungsmittels, vorzugsweise eines organischen Peroxids, durchgeführt wird.

11. Verfahren zur Herstellung des schlagfesten vinylaromatischen Pfropf-Copolymers nach einem der Ansprüche 1 bis 7, welches umfaßt: das Umsetzen in einer zum Rühren unter Erhitzen geeigneten Vorrichtung eines vorher hergestellten schlagfesten Copolymers aus vinylaromatischem Monomer/Acrylmonomer/Olefinelastomer und einer ethylenisch ungesättigten Carbonsäure und/oder einem Derivat davon in Anwesenheit eines Peroxid-Initiierungsmittels - das vorzugsweise eine Halbwertzeit von 2 bis 20 Sekunden bei 200° C aufweist - bei einer Temperatur von nicht weniger als der Schmelztemperatur der Komponenten, vorzugsweise bei einer Temperatur von wenigstens 150° C, insbesondere bei einer Temperatur von 170 und 250° C, für eine Dauer von wenigstens 15 Sekunden.

## Revendications

1. Copolymère greffé vinylaromatique résistant au choc, comprenant 100 parties en poids d'un copolymère vinylaromatique résistant au choc, constitué de 90 à 30% en poids de copolymère monomère vinylaromatique/monomère acrylique, qui est greffé au moins partiellement sur 10 à 70% en poids d'un élastomère oléfinique choisi parmi un caoutchouc EPM et/ou un caoutchouc EPDM dans lequel le rapport en poids éthylène/propylène est de 90/10 à 20/80 et la proportion de diène non conjugué, s'il y en a, est de 4 à 50 en termes d'indice d'iode, et 0,001 à 0,3 partie en poids d'un acide carboxylique éthyléniquement insaturé et/ou d'un dérivé d'un tel acide, qui est greffé sur ledit copolymère vinylaromatique résistant au choc.

2. Copolymère greffé selon la revendication 1, dans lequel le dérivé de l'acide carboxylique éthyléniquement insaturé est un anhydride, un amide ou un ester.

3. Copolymère greffé selon la revendication 1 ou 2, dans lequel le rapport en poids du monomère vinylaromatique au monomère acrylique est compris dans l'intervalle allant de 90/10 à 50/50, en particulier dans l'intervalle allant de 80/20 à 60/40.

4. Copolymère greffé selon l'une quelconque des revendications précédentes, dans lequel la proportion d'acide carboxylique éthyléniquement insaturé (ou de dérivé d'un tel acide) est comprise dans l'intervalle allant de 0,05 à 0,3% en poids par rapport au copolymère.

5. Copolymère greffé selon l'une quelconque des revendications précédentes, dans lequel le monomère vinylaromatique est un monomère répondant à la formule générale (I) : 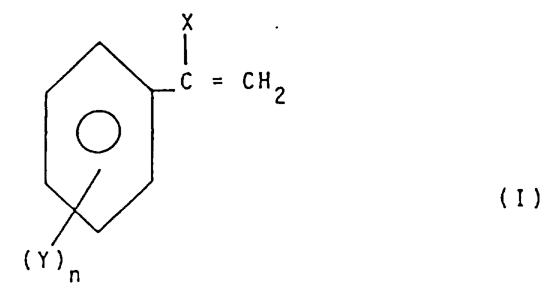 dans laquelle
X représente un atome d'hydrogène ou un groupe alkyle en C₁ à C₄,
Y représente un atome d'halogène ou un groupe alkyle en C₁ à C₄; et
n est égal à 0 ou représente un nombre entier de 1 à 5.

6. Copolymère greffé selon l'une quelconque des revendications 1 à 5, dans lequel le monomère acrylique est un monomère répondant à la formule générale (II) : 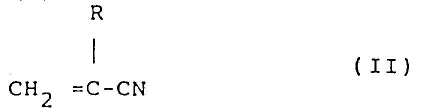 dans laquelle R représente un atome hydrogène ou un groupe alkyle en C₁ à C₅, en particulier un atome d'hydrogène.

7. Copolymère greffé selon l'une quelconque des revendications précédentes, pour lequel l'acide carboxylique éthyléniquement insaturé (ou son dérivé) est choisi parmi l'acide maléique, l'acide fumarique, l'acide acrylique, l'acide crotonique, l'acide vinylacétique, l'acide penténoïque, l'acide 2-penténoïque, l'acide 3-penténoïque, l'acide alpha-éthylacrylique, l'acide béta-méthylcrotonique, l'acide 2-méthyl-2-penténoïque, l'acide alpha-éthylcrotonique, l'acide 2,2-diméthyl-3-buténoïque, l'acide hepténoïque, l'acide 2-octénoïque, l'acide 9-tétradécénoïque, l'acide 9-hexadécénoïque, l'acide 2-octadécénoïque, l'acide 9-octadécénoïque, l'acide docosénoïque, l'acide érucique, l'acide 2,4-pentadiénoïque, l'acide diallylacétique, l'acide linoléique, l'acide linolénique et les esters, amides et anhydrides des acides insaturés précédents, et comprend en particulier de l'anhydride maléique.

8. Procédé de préparation du copolymère greffé vinylaromatique résistant au choc, selon l'une quelconque des revendications précédentes, qui comprend la polymérisation d'un mélange de monomères renfermant un monomère vinylaromatique,un monomère acrylique et un acide carboxylique éthyléniquement insaturé et/ou un dérivé d'un tel acide, en présence d'un élastomère oléfinique, d'un amorceur de polymérisation et d'un solvant inerte.

9. Procédé selon la revendication 8, dans lequel on réalise la polymérisation en une étape ou en plusieurs étapes successives, la masse réactionnelle étant agitée légèrement et uniformément à chaque étape de façon à ce que soit assuré un bon échange thermique, et dans lequel, à la fin de la polymérisation, la masse réactionnelle est introduite dans un évaporateur à film mince, chauffé à une température de 150 à 300°C et équipé de lames tournantes.

10. Procédé selon la revendication 8 ou 9, dans lequel on réalise la polymérisation en présence de 0,1 à 2% en poids, par rapport à la quantité totale de monomères et élastomère, d'un amorceur de polymérisation radicalaire, de préférence un peroxyde organique.

11. Procédé de préparation du copolymère greffé vinylaromatique résistant au choc, selon l'une quelconque des revendications 1 à 7, qui comprend la réaction, dans un équipement approprié pour l'agitation et le chauffage, d'un copolymère résistant au choc, préparé au préalable, constitué de monomère vinylaromatique/monomère acrylique/élastomère oléfinique, et d'un acide carboxylique éthyléniquement insaturé et/ou d'un dérivé d'un tel acide, en présence d'un amorceur du type peroxyde (présentant de préférence une demi-vie de 2 à 20 secondes à 200°C), à une température non inférieure à la température de fusion des constituants, de préférence à une température d'au moins 150°C et en particulier à une température de 170 à 250°C, pendant au moins 15 secondes.
